# EUROPEAN PATENT APPLICATION

(11) **EP 1 793 523 A1**
(43) Date of publication of application: **06.06.2007**
(21) Application number: 06024736.8
(22) Date of filing: 29.11.2006
(51) Int. Cl.: H04L 7/033, H04L 7/04

(54) **Receiver deploying error detecting means for synchronisation**

(30) Priority: 02.12.2005 JP 2005348668
(71) Applicant: Yokogawa Electric Corporation, Tokyo 180-8750 (JP)
(72) Inventor: Shimizu, Hiroshi, Musashino-shi Tokyo 180-8750 (JP)
(74) Representative: Grünecker, Kinkeldey, Stockmair & Schwanhäusser Anwaltssozietät

(57) **Abstract**

A receiver for performing packet communication by using a serial transmission line, includes: a plurality of receiving circuits for generating reception data by receiving a transmission signal via the serial transmission line at timings of clock signals having different phases; a plurality of determining circuits for respectively determining an acceptability of the reception data respectively generated by the receiving circuits; and a selecting circuit for selecting the reception data determined to be correct by the determining circuits.

## Description

This application claims foreign priority based on Japanese Patent application No. 2005-348668, filed December 2, 2005, the content of which is incorporated herein by reference in its entirety.

### BACKGROUND OF THE INVENTION

### 1. Field of the Invention

The present invention relates to a receiver for performing packet communication by using a serial transmission line, particularly relates to a receiver capable of performing communication while maintaining high communication efficiency in high speed communication without performing a clock synchronization.

### 2. Description of the Related Art

There are references related to a receiver for performing packet communication by using a serial transmission line, such as JP-T-2001-523913, JP-A-2002-057674, JP-A-2002-208988 and JP-A-2004-328434.

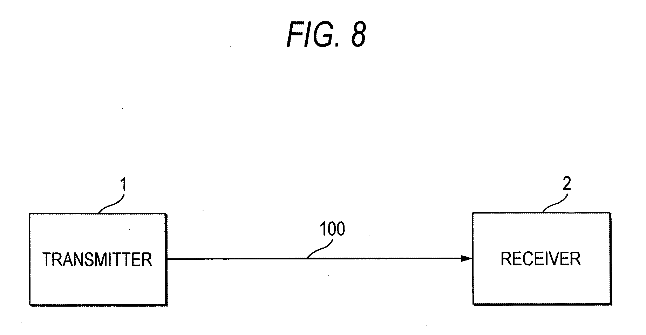

Fig.8 is a constitution block diagram showing an example of a packet communication systemof the related art for performing packet communication by using a serial transmission line. In Fig.8, numeral 1 designates a transmitter for transmitting a packet signal, numeral 2 designates a receiver for receiving the packet signal, numeral 100 designates a serial transmission line.

A transmission output terminal of the transmitter 1 is connected to one end of the serial transmission line 100, and other end of the serial transmission line 100 is connected to a reception input terminal of the receiver 2.

Here, operation of the related art shown in Fig.8 will be explained. The transmitter 1 does not transmit one data in one block but divides one data to be transmitted into small blocks (hereinafter, simply referred to as packet signal), and transmits individual packet signals to the serial transmission line 100 respectively at arbitrary timings.

Further, the receiver 2 receives the individual packet signals from the serial transmission line 100 respectively at arbitrary timings, and reproduces one data by combining the received individual packet signals to thereby completing the reception of the data.

However, when a distance between the transmitter 1 and the receiver 2 is long, it is not guaranteed that a clock on a side of the transmitter 1 and a clock on a side of the receiver 2 are synchronized with each other, and there is a concern that data transmission is not correctly performed unless the clock synchronization is performed on the side of the receiver 2.

Therefore, generally, the transmitter 1 generates a signal (hereinafter, simply referred to as transmission signal) constituted by attaching a preamble signal to a head portion of the packet signal which is a serial data, and transmits the transmission signal to the serial transmission line 100. The receiver 2 performs the clock synchronization by using the preamble signal in the received transmission signal to thereby correctly perform data transmission.

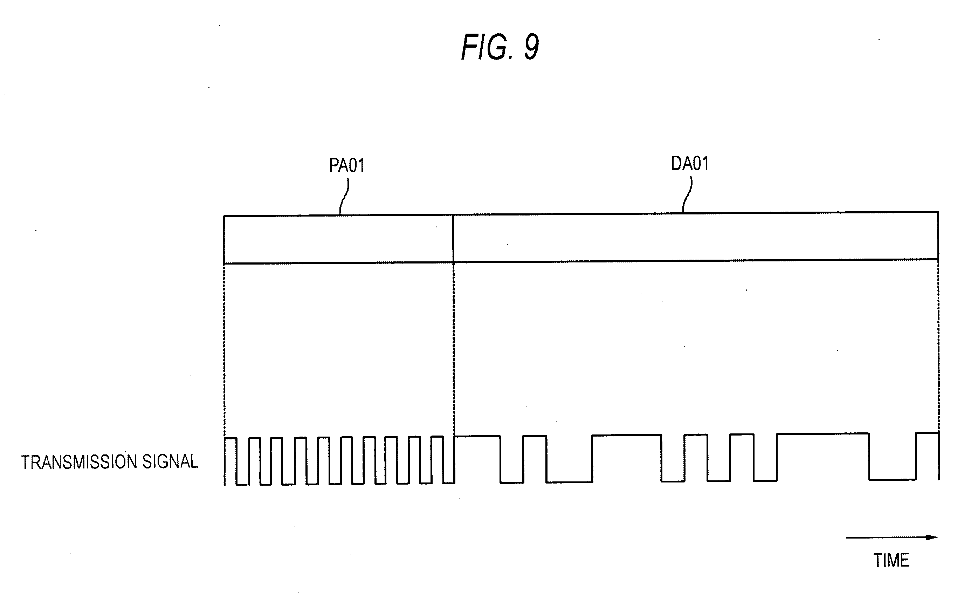

An explanation will be given of such clock synchronization using the preamble signal in reference to Fig.9. Fig.9 is an explanatory diagram showing an example of the transmission signal transmitted through the serial transmission line 100, in Fig. 9, A shows the transmission signal, and notation 'PA01' in Fig.9 designates the preamble signal, and notation 'DA01' in Fig.9 designates the packet signal to be transmitted.

The transmitter 1 generates and transmits the transmission signal by attaching the signal in synchronization with the clock of its own to the head portion of the packet signal to be transmitted indicated by 'DA01' in Fig.9, as shown by 'PA01' in Fig.9.

Further, the receiver 2 can correctly perform data transmission by receiving the transmission signal, synchronizing the clock by using the preamble signal designated by "PA01' in Fig.9 in the received transmission signal, and reading the packet signal designated by 'DA01' in Fig.9 at a timing of the synchronized clock.

As a result, normal data transmission can be performed by attaching the preamble signal to the headportion of the packet signal to be transmitted on the side of the transmitter 1 and transmitting the transmission data, synchronizing the clock by using the preamble signal on the side of the receiver 2, thereafter, reading the packet signal.

Further, by coding the packet signal indicated by 'DA01' in Fig.9 in the transmission signal indicated by A in Fig.9 by a Manchester encoding or the like, not only the clock synchronization is performed by using the preamble signal, but also synchronization of the clock can be maintained by extracting the clock also ina step of decoding the packet signal and therefore, highly accurate reception can be performed.

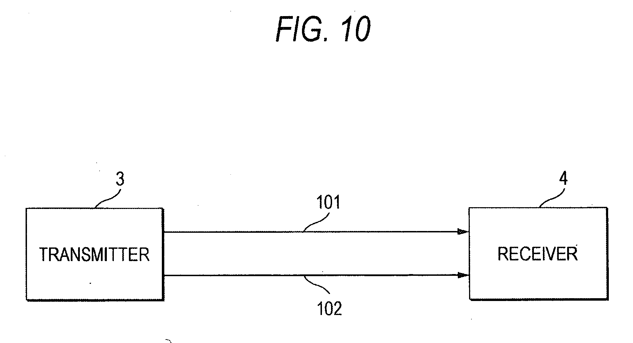

Further, Fig.10 is a constitution block diagram showing other example of a packet communication system of a related art for performing packet communication by using a serial transmission line. In Fig.10, numeral 3 designates a transmitter for transmitting a packet signal, numeral 4 designates a receiver for receiving the packet signal, and numerals 101 and 102 designate serial transmission lines.

A clock output terminal of the transmitter 3 is connected to one end of the serial transmission line 101, and other end of the serial transmission line 101 is connected to a clock input terminal of the receiver 4. Further, a transmission output terminal of the transmitter 3 is connected to one end of the serial transmission line 102, and other end of the serial transmission line 102 is connected to a reception input terminal of the receiver 4.

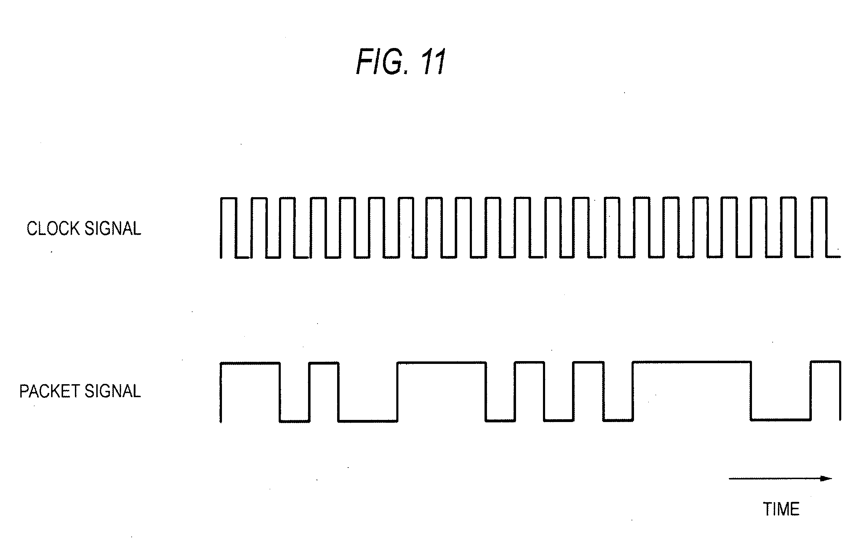

Here, operation of the related art shown in Fig. 10 will be explained in reference to Fig.11. Fig.11 is an explanatory view showing an example of a clock signal and a packet signal transmitted through the serial transmission lines 101 and 102, A in Fig.11 shows a clock signal, and B in Fig.11 shows a packet signal to be transmitted.

The transmitter 3 transmits the packet signal to be transmitted shown as B to the serial transmission line 102 and transmits the clock signal shown as A to the serial transmission line 101.

Further, the receiver 4 can correctly perform data transmission easily by reading the packet signal shown as B at a timing of a synchronized clock while synchronizing the clock by using the clock signal shown as A received from the serial transmission line 101.

However, according to the related art shown in Fig. 8 and Fig.9, the clock synchronization is performed only by the preamble signal which is the head portion of the transmission signal (preamble signal + packet signal) and therefore, the clock synchronization cannot be maintained as time elapses owing to errors in the clocks of the transmitter 1 and the receiver 2. Therefore, there poses a problem that when the packet signal portion is long, it is difficult to maintain the clock synchronization until all of the packet signals are read. Further, in a case of high-speed serial communication, there poses a problem that communication efficiency is reduced since it is necessary to make the preamble signal long.

Further, although it can be avoided that the synchronization of the clock cannot be maintained as time elapses, by coding the packet signal designated by 'DA01' in Fig.9 by a Manchester encoding or the like, in a case of the high-speed serial communication, a coding processing and a decoding processing need to be performed at high speed, which poses a problem that circuit design becomes difficult. Further, similar to the former, in a case of the high-speed serial communication, there poses a problem that communication efficiency is reduced since it is necessary to make the preamble signal long.

Further, according to the related art shown in Fig.10, the serial transmission line 102 for transmitting the packet signal to be transmitted and another serial transmission line 101 for transmitting the clock signal are needed, which poses a problem that cost of laying the serial transmission path is increased.

### SUMMARY OF THE INVENTION

The present invention has been made in view of the above circumstances, and provides a receiver capable of performing communication while maintaining high communication efficiency in high-speed serial communication without performing a clock synchronization.

In some implementations, a receiver of a first aspect of the invention for performing packet communication by using a serial transmission line, the receiver comprising:
apluralityof receiving circuits for generating reception data by receiving a transmission signal via the serial transmission line at timings of clock signals having different phases;
a plurality of determining circuits for respectively determining an acceptability of the reception data respectively generated by the receiving circuits; and
a selecting circuit for selecting the reception data determined to be correct by the determining circuits.

Thus, it is not necessary to synchronize the clock, and a preamble signal and a Manchester encoding or the like are not necessary and therefore, communication can be performed while maintaining high communication efficiency by high-speed serial communication.

In the receiver of the first aspect of the invention,
the plurality of receiving circuits includes a first receiving circuit, a second receiving circuit and a third receiving circuit for generating the reception data by receiving the transmission signal via the serial transmission line at the timings of the clock signals phases of which differ from each other by 120°,
the plurality of determining circuits includes a first determining circuit, a second determining circuit and a third determining circuit for respectively determining the acceptability of the reception data respectively generated by the first, the second and the third receiving circuits, and the selecting circuit selects the reception data determined to be correct by the first, the second and the third determining circuits.

Thus, it is not necessary to synchronize the clock, and a preamble signal and a Manchester encoding or the like are not necessary and therefore, communication can be performed while maintaining high communication efficiency by high-speed serial communication.

In some implementations, a receiver of a second aspect of the invention for performing packet communication by using a serial transmission line, the receiver comprising:
a plurality of delay circuits for generating a plurality of delayed transmission signals by delaying a transmission signal being received via the serial transmission line respectively, and adjusting delay time periods for delaying the transmission signal so that the transmission signal and the plurality of delayed transmission signals do not overlap with each other and phase differences among the respective signals are different from each other;
a receiving circuit for generating reception data by successively receiving the transmission signal and the plurality of delayed transmission signals at a timing of a clock signal;
a determining circuit for respectively determining acceptabilities of the reception data successively generated by the receiving circuit; and
a selecting circuit for selecting the reception data determined to be correct by the determining circuit.

Thus, it is not necessary to synchronize the clock, and a preamble signal and a Manchester encoding or the like are not necessary and therefore, communication can be performed while maintaining high communication efficiency by high-speed serial communication.

In the receiver of the second aspect of the invention,
the plurality of delay circuits includes a first delay circuit and a second delay circuit for generating a first delayed transmission signal and a second delayed transmission signal by delaying the transmission signal being received via the serial transmission line respectively, and the first and the second delay circuits adjust the delay time periods so that the transmission signal, the first delayed transmission signal and the second delayed transmission signal do not overlap with each other and the phase differences among the respective signals are different from each other by 120°, and
the receiving circuit generates the reception data by successively receiving the transmission signal, the first delayed transmission signal and the second delayed transmission signal at the timing of the clock signal.

Thus, it is not necessary to synchronize the clock, and a preamble signal and a Manchester encoding or the like are not necessary and therefore, communication can be performed while maintaining high communication efficiency by high-speed serial communication.

In the receiver of the first aspect and the second aspect of the invention, the determining circuit calculates a cyclic redundancy check from the transmission signal,
when the calculated cyclic redundancy check matches with a cyclic redundancy check that is attached to the transmission signal, the determining circuit determines that the reception data is correct, and
when the calculated cyclic redundancy check does not match with the cyclic redundancy check that is attached to the transmission signal, the determining circuit determines that the reception data is corrupted.

Thus, it is not necessary to synchronize the clock, and a preamble signal and a Manchester encoding or the like are not necessary and therefore, communication can be performed while maintaining high communication efficiency by high-speed serial communication.

In the receiver of the first aspect and the second aspect of the invention, the determining circuit calculates a checksum from the transmission signal,
when the calculated checksum matches with a checksum that is attached to the transmission signal, the determining circuit determines that the reception data is correct, and
when the calculated checksum does not match with the checksum that is attached to the transmission signal, the determining circuit determines that the reception data is corrupted.

Thus, it is not necessary to synchronize the clock, and a preamble signal and a Manchester encoding or the like are not necessary and therefore, communication can be performed while maintaining high communication efficiency by high-speed serial communication.

In the receiver of the first aspect and the second aspect of the invention, the determining circuit calculates a parity from the transmission signal,
when the calculated parity matches with a parity that is attached to the transmission signal, the determining circuit determines that the reception data is correct, and
when the calculated parity does not match with the parity that is attached to the transmission signal, the determining circuit determines that the reception data is corrupted.

Thus, it is not necessary to synchronize the clock, and a preamble signal and a Manchester encoding or the like are not necessary and therefore, communication can be performed while maintaining high communication efficiency by high-speed serial communication.

According to the receiver of the invention, by generating the reception data by receiving the transmission signal at the timings of the plurality of clock signals having different phases, and selecting the reception data determined to be correct from the reception data by CRC or the like, it is not necessary to synchronize the clock, a preamble signal and a Manchester encoding or the like are not necessary and therefore, communication can be performed while maintaining high communication efficiency by high-speed serial communication.

Further, according to the receiver of the invention, by generating the plurality of delayed transmission signals by respectively delaying the transmission signal, adjusting the delay time periods of the delay circuits such that the transmission signal and the plurality of delayed transmission signals do not overlap with each other and the phase differences with the clock signal of the receiving circuit differ from each other among the respective signals, generating the reception data by receiving the transmission signal and the plurality of delayed transmission signals at the timing of the clock signal by the receiving circuit, and selecting the reception data determined to be correct from the reception data by CRC or the like, it is not necessary to synchronize the clock, a preamble signal and a Manchester encoding or the like are not necessary and therefore, communication can be performed while maintaining high communication efficiency by high-speed serial communication.

### BRIEF DESCRIPTION OF THE DRAWINGS

Fig. 1 is a constitution block diagram showing an embodiment of a receiver according to the invention.
Fig.2 is a timing chart showing a relationship between a clock signal of the receiving circuit and a transmission signal.
Fig.3 is a timing chart showing a relationship between a clock signal of the receiving circuit and a transmission signal.
Fig.4 is a timing chart showing a relationship between a clock signal of the receiving circuit and a transmission signal.
Fig.5 is an explanatory view showing an example of the transmission signal transmitted through a serial transmission path.
Fig.6 is a constitution block diagram showing other embodiment of a receiver according to the invention.
Fig.7 is an explanatory diagram showing a relationship between a transmission signal and respectively delayed transmission signals.
Fig.8 is a constitution block diagram showing an example of a packet communication system of a related art for performing packet communication by using a serial transmission path.
Fig.9 is an explanatory diagram showing an example of a transmission signal transmitted through a serial transmission line.
Fig.10 is a constitution block diagram showing other example of a packet communication system of the related art for performing packet communication by using a serial transmission line.
Fig.11 is an explanatory diagram showing an example of a clock signal and a packet signal transmitted through the serial transmission line.

### DESCRIPTION OF THE PRFERRED EMBODIMENTS

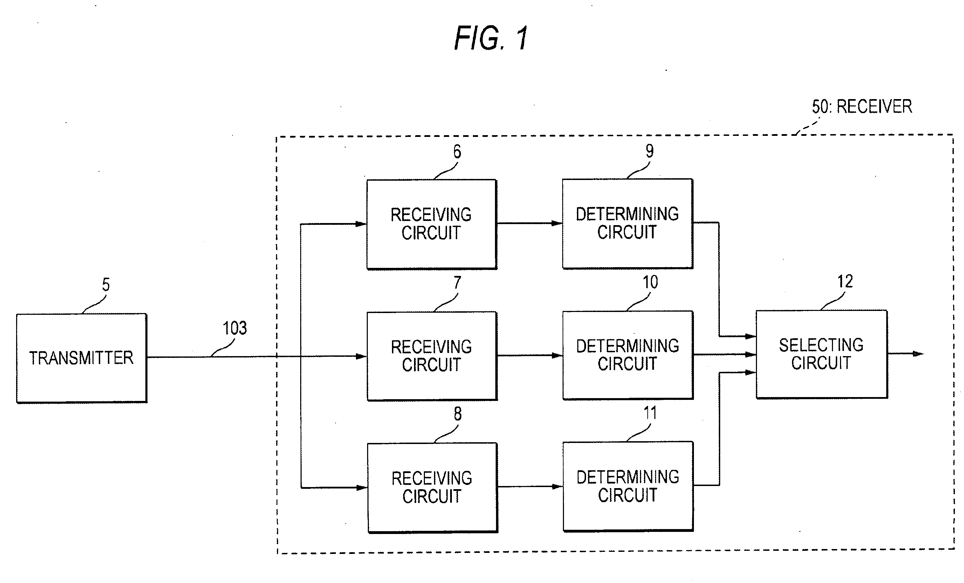

The invention will be explained in details in reference to the drawings as follows. Fig.1 is a constitutionblockdiagram showing an embodiment of a receiver according to the invention.

In Fig.1, numeral 5 designates a transmitter for transmitting a packet signal, numerals 6, 7 and 8 designate receiving circuits of which clock signals respectively have different phases, numerals 9, 10 and 11 designate determining circuits for determining acceptability of reception data, numeral 12 designates a selecting circuit for selecting a correct reception data, and numeral 103 designates a serial transmission line. Further, a receiver 50 includes numerals 6, 7, 8, 9, 10, 11 and 12.

A transmission output terminal of the transmitter 5 is connected to one end of the serial transmission line 103, and other end of the serial transmission line 103 is connected respectively to reception input terminals of the three receiving circuits 6, 7 and 8 of the receiver 50. Further, outputs of the receiving circuits 6, 7 and 8 are respectively connected to the determining circuits 9, 10 and 11, and outputs of the determining circuits 9, 10 and 11 are respectively connected to three input terminals of the selecting circuit 12.

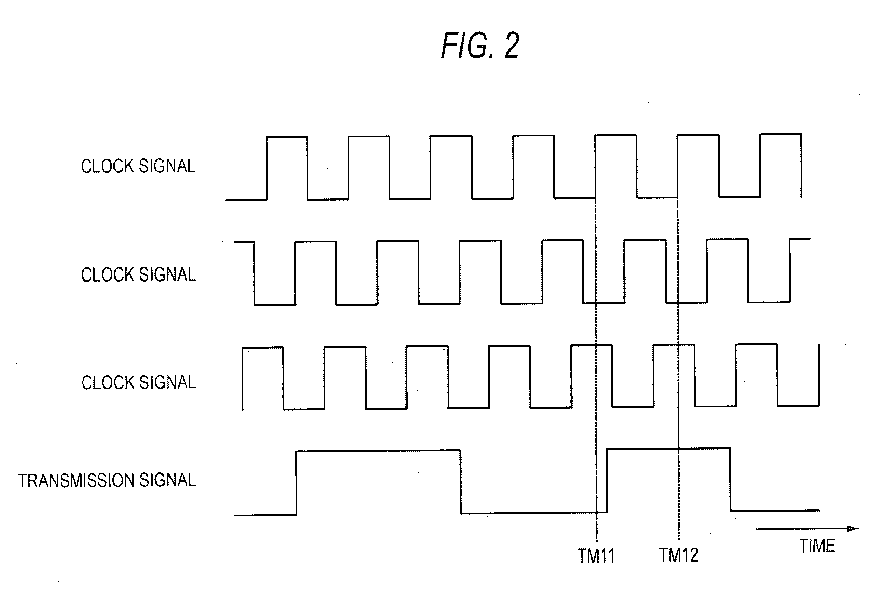

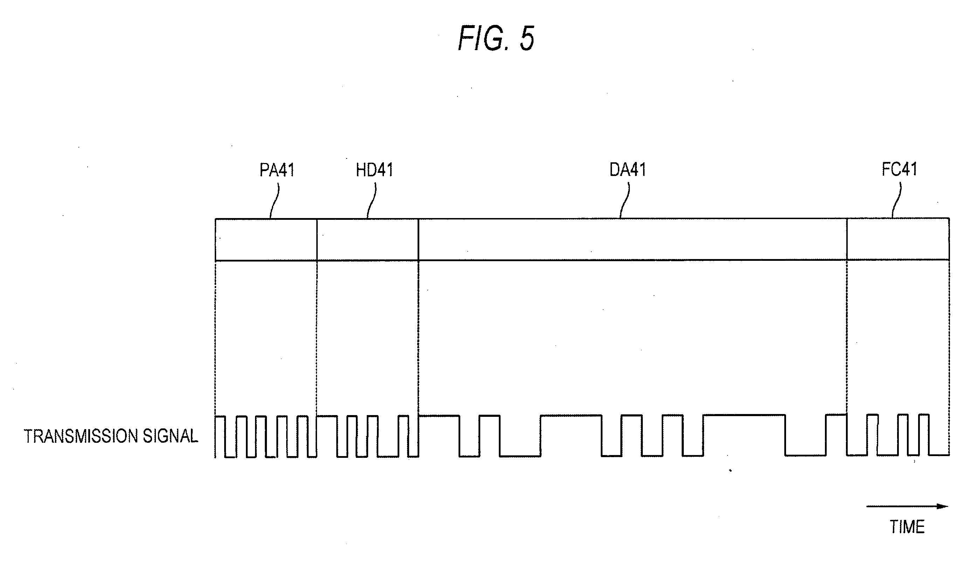

Here, operation of the embodiment shown in Fig.1 will be explained in reference to Fig.2, Fig.3, Fig.4 and Fig. 5. Fig.2, Fig.3 and Fig. 4 are timing charts showing a relationship between clock signals of the respective receiving circuits 6 through 8 and a transmission signal, Fig. 5 is an explanatory view showing an example of the transmission signal transmitted through the serial transmission line 103.

Phases of the clock signals of the respective receiving circuits 6, 7 and 8 designated by notations A, B and C in Fig.2 differ from each other by '120°'. For example, there is a relationship that when assuming the clock signal A in Fig. 2 as a reference, a phase difference of a clock signal shown as B in Fig.2 is '120°', and a phase difference of a clock signal shown as C in Fig.2 is '240°'.

Further, the respective receiving circuits 6, 7 and 8 receive the transmission signal shown as D in Fig.2 at timings of the respective clock signals to generate reception data.

For example, when the receiving circuit 6 receives the transmission signal at timings of clock signals indicated by 'TM11' and 'TM12' in Fig.2, the reception data respectively become '0' and '1'.

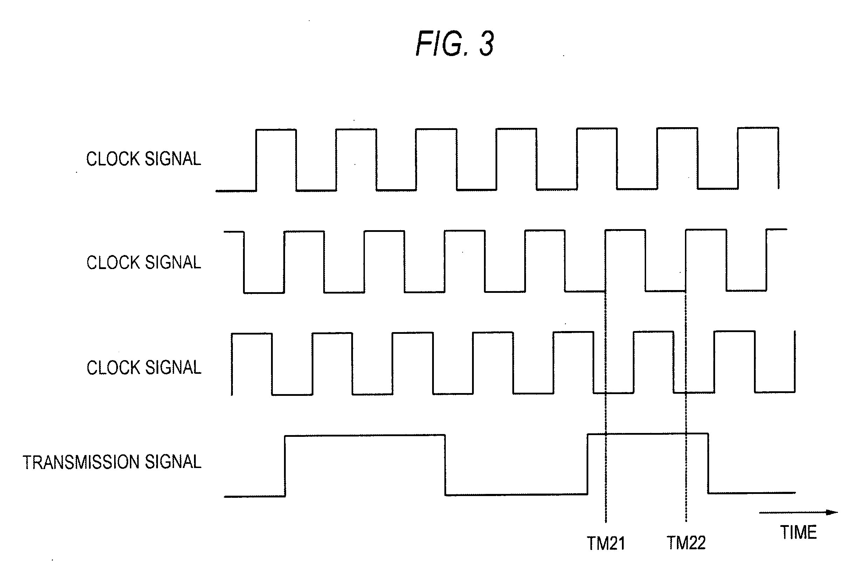

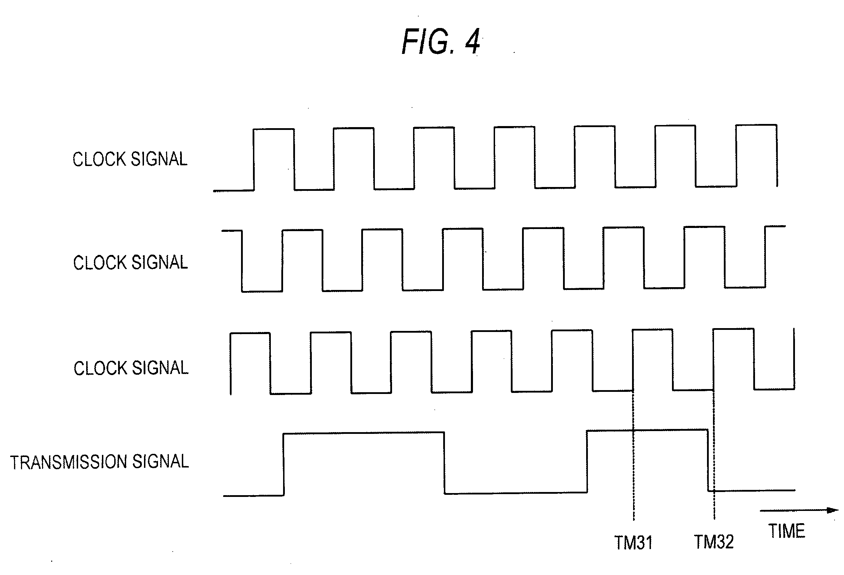

Similarly, for example, when the receiving circuit 7 receives the transmission signal at timings of the clock signals indicated by 'TM21' and 'TM22' in Fig.3, the reception data respectively becomes '1' and '1'. When the receiving circuit 7 receives the transmission signal at timings of clock signals indicated by 'TM31' and 'TM32' in Fig.4, the reception data respectively become '1' and '0'.

Further, the determining circuits 9, 10 and 11 determine whether the reception data inputted in this way are correct.

Specifically, as shown by Fig.5, the transmission signal includes a preamble signal designatedby notation 'PA41' in Fig.5, a header signal designated by notation 'HD 41' in Fig. 5, a packet signal to be transmitted designatedby notation 'DA41' in Fig. 5, and an FCS (Frame Check Sequence) signal designated by notation 'FC41' in Fig.5 and therefore, acceptability of the reception data is determined by using a cyclic redundancy check (hereinafter, simply referred to as CRC), checksum, parity or the like that is attached to 'FC41' in Fig.5.

For example, the determining circuits 9 through 11 respectively calculate CRC from the preamble signal designated by 'PA41' in Fig.5, the header signal designated by 'HD41' in Fig. 5 and the packet signal to be transmitted indicated by 'DA41' in Fig.5, and determines as correct reception data when calculated CRC matches with CRC attached to 'FC41' in Fig.5, and determines that the reception data is corrupted when the calculated CRC does not match with the CRC attached to 'FC41'.

The selecting circuit 12 selects the reception data determined to be the correct reception data by the determining circuits 9, 10 and 11, and outputs the selected reception data to a circuit at a rear stage.

That is, serial communication can be performed without synchronizing the clock by generating the reception data by the three receiving circuits 6 through 8 by receiving the transmission signal at the clock signals the phases of which differ from each other by '120°', determining the acceptability of the reception data by CRC or the like by the determining circuits 9 through 11, and selecting the reception data determined to be correct in the determining circuits 9 through 11 by the selecting circuit 12.

As a result, by generating the reception data by receiving the transmission signal at the timings of the clock signals having the plurality of different phases, and selecting the reception data determined to be correct from the reception data by CRC or the like, it is not necessary to synchronize the clock, and the preamble signal and a Manchester encoding or the like are not necessary and therefore, communication can be performed while maintaining the high communication efficiency by the high-speed serial communication.

However, in reality, an error is necessarily present since clocks of the receiver 50 and three receiving circuits 6 through 8 are not the same and therefore, when a maximum value of the error is assumed to be 'a%', it is preferable to make a bit length of packet signal equal to or smaller than 'a×100 (bit)'.

Further, although in the embodiment shown in Fig.1, there is exemplified the receiver 50 including 3 sets of the receiving circuit and the determining circuit, and the selecting circuit, however, the receiver may be constituted by a plurality of delay circuits, single set of the receiving circuit and the determining circuit, and the selecting circuit.

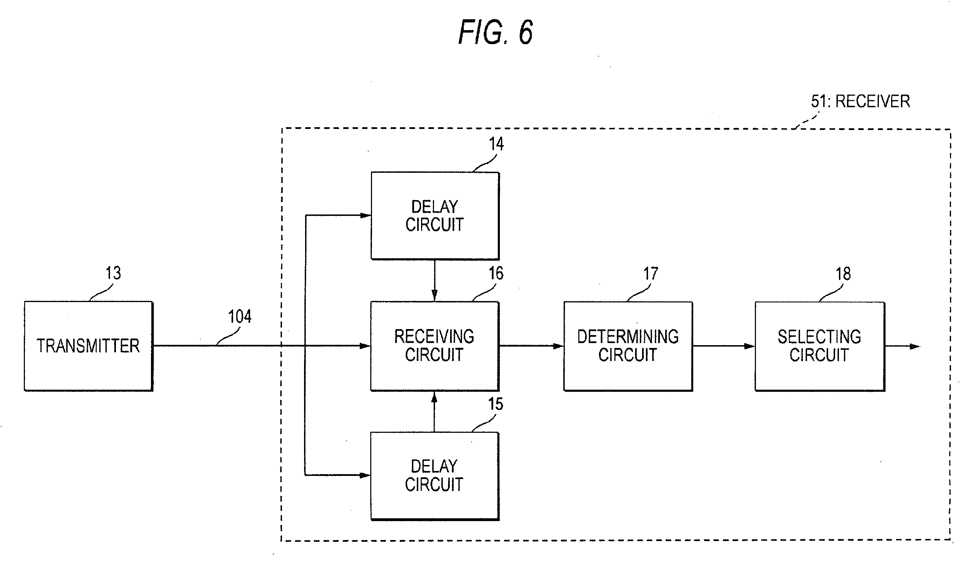

Fig.6 is a constitution block diagram showing other embodiment of such a receiver according to the invention. In Fig.6, numeral 13 designates a transmitter for transmitting a packet signal, numerals 14 and 15 designate delay circuits for delaying a transmission signal by predetermined time periods, numeral 16 designates a receiving circuit, numeral 17 designates a determining circuit for determining acceptability of reception data, numeral 18 designates a selecting circuit for selecting correct reception data, and numeral 104 designates a serial transmission line. Further, a receiver 51 includes numerals 14, 15, 16, 17 and 18.

A transmission output terminal of the transmitter 13 is connected to one end of the serial transmission line 104, other ends of the serial transmission line 104 are respectively connected to input terminals of two delay circuits 14 and 15 in the receiver 51 and connected to a first reception input terminal of the receiving circuit 16, respectively.

Further, outputs of the delay circuits 14 and 15 are respectively connected to a second and a third reception input terminal of the receiving circuit 16, an output of the receiving circuit 16 is connected to the determining circuit 17, and an output of the determining circuit 17 is connected to an input terminal of the selecting circuit 18.

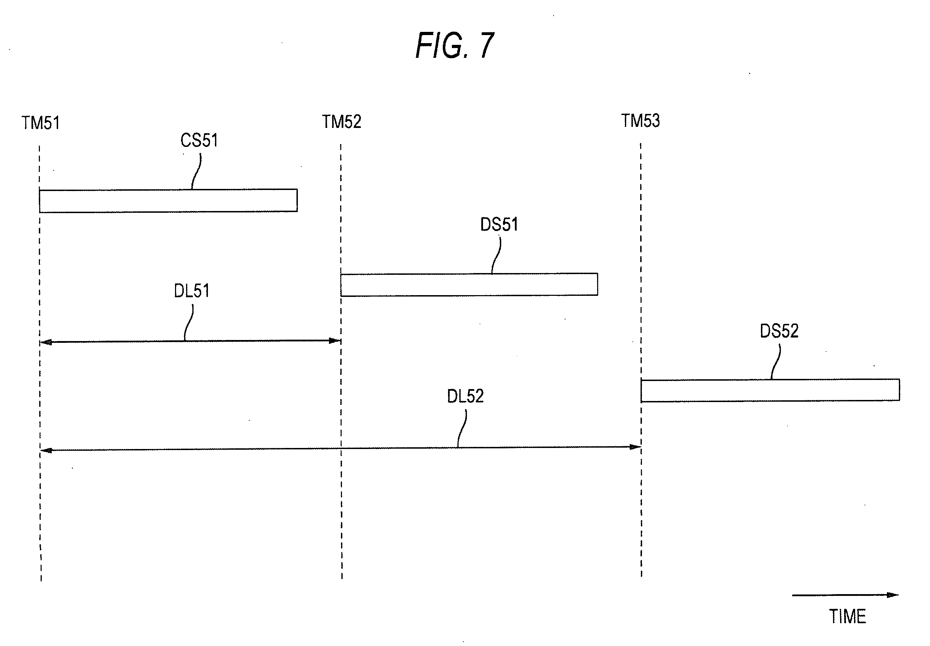

Here, operation of the other embodiment shown in Fig.6 will be explained in reference to Fig. 7. Fig. 7 is an explanatory diagram showing a relationship of a transmission signal and respectively delayed transmission signals.

At a timing designated by 'TM51' in Fig. 7, a transmission signal designated by 'CS51' in Fig.7 is directly inputted from the serial transmission line 104. Therefore, the receiving circuit 16 generates reception data by receiving the directly inputted transmission signal designated by 'CS51' in Fig.7 at a timing of a clock signal of its own.

On the other hand, the delay circuit 14 delays the inputted transmission signal by 'a time period corresponding to a length of the transmission signal' + 'a time period corresponding to 120° of the phase of the clock signal of the receiving circuit 16' + 'a margin time period' , and inputs the delayed transmission signal to the receiving circuit 16.

For example, a first delayed transmission signal designated by 'DS51' in Fig. 7 delayed by a time period designated by 'DL51' in Fig. 7 is inputted to the receiving circuit 16 after the transmission signal designated by 'CS51' in Fig.7.

Similarly, the delay circuit 15 delays the inputted transmission signal by 'a time period corresponding to a length of the transmission signal' + 'a time period corresponding to the length of the transmission signal' + 'a time period corresponding to 240° of the phase of the clock signal of the receiving circuit 16' + 'a margin time period' + 'a margin time period', and inputs the delayed transmission signal to the receiving circuit 16.

For example, a second delayed transmission signal designated by 'DS52' in Fig. 7 delayed by a time period designated by 'DL52' in Fig. 7 is inputted to the receiving circuit 16 after the first delayed transmission signal designated by 'DS51' in Fig.7.

Here, when a phase relationship between a clock signal of the receiving circuit 16 and directly inputted transmission signal designated by 'CS51' in Fig.7 corresponds to a phase relationship between A in Fig. 2 and D in Fig. 2, a phase relation ship between the clock signal of the receiving circuit 16 and the first delayed transmission signal designated by 'DS 51' in Fig.7 corresponds to a phase relationship between B in Fig.2 and D in Fig.2 when time axes are aligned.

Similarly, a phase relationship between the clock signal of the receiving circuit 16 and the second delayed transmission signal designated by 'DS52' in Fig.7 corresponds to a phase relationship between C in Fig.2 and D in Fig.2 when time axes are aligned.

Therefore, in the single receiving circuit 16, reception data constituted by receiving the transmission signal at the timing of the clock signal indicated by A in Fig.2, reception data constituted by receiving the transmission signal at the timing of the clock signal indicated by B in Fig. 2, and reception data constituted by receiving the transmission signal at the timing of the clock signal indicated by C in Fig. 2 are successively generated in a time sequence, and outputted to the determining circuit 17.

Further, the determining circuit 17 determines whether the reception data successively generated in this way are correct.

Specifically, as shown by Fig. 5, the transmission signal includes the preamble signal designated by 'PA41' in Fig. 5, the header signal designated by 'HD41' in Fig.5, the packet signal to be transmitted designated by 'DA41' in Fig.5, and the FCS signal designatedby 'FC41' in Fig. 5 and therefore, acceptability of the reception data is determined by using CRC, checksum, parity or the like attached to 'FC41' in Fig.5.

For example, the determining circuit 17 calculates CRC from the preamble signal designatedby 'PA41' in Fig. 5, the header signal designated by 'HD41' in Fig.5 and the packet signal to be transmitted designated by 'DA41' in Fig.5, determines the reception data is correct when the calculated CRC matches with CRC attached to 'FC41' in Fig. 5, and determines that the reception data is corrupted when the calculated CRC and the CRC attached to 'FC41' do not match with each other.

The selecting circuit 18 selects reception data determined as correct reception data by the determining circuit 17, and outputs the selected reception data to a circuit at a rear stage.

That is, serial communication can be performed without synchronizing the clock by generating the transmission signal, and the first and seconddelayed transmission signals constituted by respectively delaying the transmission signal, adjusting delay time periods of the delay circuits such that the transmission signal, and the first and second delayed transmission signals do not overlap each other, further, phase differences between the transmission signal and the first and second delayed transmission signals respectively become '120°' and '240°' relative to the phase difference of the transmission signal and the clock signal of the receiving circuit 17, generating the reception data by receiving the transmission signal and the first and the second delayed transmission signals at the timing of the clock signal by the receiving circuit, determining the acceptability of the reception data by CRC or the like by the determining circuit 17, and selecting reception data determined to be correct in the determining circuit 17 by the selecting circuit 18.

As a result, by generating the transmission signal and the plurality of delayed transmission signals constituted by respectively delaying the transmission signal, adjusting the delay time periods of the delay circuits such that the plurality of delayed transmission signals do not overlap each other, further, the phase differences with the clock signal differ between the respective signals, generating the reception data by receiving the transmission signal and the plurality of delayed transmission signals at the timing of the clock signal by the receiving circuit, and selecting the reception data determined to be correct by CRC or the like from the reception data, it is not necessary to synchronize the reception data, and the preamble signal and the Manchester encoding or the like are not necessary and therefore, communication can be performed while maintaining the high communication efficiency in the high-speed serial communication.

Further, although in the embodiment shown in Fig.1, there is exemplified the receiver 50 including 3 sets of the receiving circuit and the determining circuit, and the selecting circuit, naturally, the invention is not limited thereto but the receiver may include 4 or more of sets of the receiving circuit and the determining circuit, and the selecting circuit. In this case, reception having higher accuracy can be performed.

Further, although in the another embodiment shown in Fig. 6, there is exemplified the receiver 51 including the two delay circuits, the receiving circuit, the determining circuit and the selecting circuit, naturally, the invention is not limited thereto but the receiver may include 3 or more delay circuits, the receiving circuit, the determining circuit and the selecting circuit. In this case, reception having higher accuracy can be performed.

Further, although in the other embodiment shown in Fig. 6, it is described that the receiving circuit includes the three reception input terminals for simplifying the explanation, naturally, a single reception input terminal may be used and inputted with transmission signals (a transmission signal without delay, two transmission signals respectively delayed by predetermined time periods) time-sequentially.

Further, although in the embodiment shown in Fig.1 and the like, an explanation has been given by taking an example of serial communication, naturally, the invention is applicable also to parallel communication having a plurality of transmission lines.

Further, although in an example of the transmission signal shown in Fig. 5, the preamble signal is attached, naturally, the preamble signal is not indispensable to the transmission signal since the clock is not synchronized in this invention.

It will be apparent to those skilled in the art that various modifications and variations can be made to the described preferred embodiments of the present invention without departing from the spirit or scope of the invention. Thus, it is intended that the present invention cover all modifications and variations of this invention consistent with the scope of the appended claims and their equivalents.

## Claims

1. A receiver for performing packet communication by using a serial transmission line, the receiver comprising:
a plurality of receiving circuits for generating reception data by receiving a transmission signal via the serial transmission line at timings of clock signals having different phases;
a plurality of determining circuits for respectively determining an acceptability of the reception data respectively generated by the receiving circuits; and
a selecting circuit for selecting the reception data determined to be correct by the determining circuits.

2. The receiver according to claim 1, wherein
the plurality of receiving circuits includes a first receiving circuit, a second receiving circuit and a third receiving circuit for generating the reception data by receiving the transmission signal via the serial transmission line at the timings of the clock signals phases of which differ from each other by 120°,
the plurality of determining circuits includes a first determining circuit, a second determining circuit and a third determining circuit for respectively determining the acceptability of the reception data respectively generated by the first, the second and the third receiving circuits, and the selecting circuit selects the reception data determined to be correct by the first, the second and the third determining circuits.

3. A receiver for performing packet communication by using a serial transmission line, the receiver comprising:
a plurality of delay circuits for generating a plurality of delayed transmission signals by delaying a transmission signal being received via the serial transmission line respectively, and adjusting delay time periods for delaying the transmission signal so that the transmission signal and the plurality of delayed transmission signals do not overlap with each other and phase differences among the respective signals are different from each other;
a receiving circuit for generating reception data by successively receiving the transmission signal and the plurality of delayed transmission signals at a timing of a clock signal;
a determining circuit for respectively determining acceptabilities of the reception data successively generated by the receiving circuit; and
a selecting circuit for selecting the reception data determined to be correct by the determining circuit.

4. The receiver according to claim 3, wherein
the plurality of delay circuits includes a first delay circuit and a second delay circuit for generating a first delayed transmission signal and a second delayed transmission signal by delaying the transmission signal being received via the serial transmission line respectively, and the first and the second delay circuits adjust the delay time periods so that the transmission signal, the first delayed transmission signal and the second delayed transmission signal do not overlap with each other and the phase differences among the respective signals are different from each other by 120°, and
the receiving circuit generates the reception data by successively receiving the transmission signal, the first delayed transmission signal and the second delayed transmission signal at the timing of the clock signal.

5. The receiver according to claim 1, wherein the determining circuit calculates a cyclic redundancy check from the transmission signal,
when the calculated cyclic redundancy check matches with a cyclic redundancy check that is attached to the transmission signal, the determining circuit determines that the reception data is correct, and
when the calculated cyclic redundancy check does not match with the cyclic redundancy check that is attached to the transmission signal, the determining circuit determines that the reception data is corrupted.

6. The receiver according to claim 2, wherein the determining circuit calculates a cyclic redundancy check from the transmission signal,
when the calculated cyclic redundancy check matches with a cyclic redundancy check that is attached to the transmission signal, the determining circuit determines that the reception data is correct, and
when the calculated cyclic redundancy check does not match with the cyclic redundancy check that is attached to the transmission signal, the determining circuit determines that the reception data is corrupted.

7. The receiver according to claim 3, wherein the determining circuit calculates a cyclic redundancy check from the transmission signal,
when the calculated cyclic redundancy check matches with a cyclic redundancy check that is attached to the transmission signal, the determining circuit determines that the reception data is correct, and
when the calculated cyclic redundancy check does not match with the cyclic redundancy check that is attached to the transmission signal, the determining circuit determines that the reception data is corrupted.

8. The receiver according to claim 4, wherein the determining circuit calculates a cyclic redundancy check from the transmission signal,
when the calculated cyclic redundancy check matches with a cyclic redundancy check that is attached to the transmission signal, the determining circuit determines that the reception data is correct, and
when the calculated cyclic redundancy check does not match with the cyclic redundancy check that is attached to the transmission signal, the determining circuit determines that the reception data is corrupted.

9. The receiver according to claim 1, wherein the determining circuit calculates a checksum from the transmission signal,
when the calculated checksum matches with a checksum that is attached to the transmission signal, the determining circuit determines that the reception data is correct, and
when the calculated checksum does not match with the checksum that is attached to the transmission signal, the determining circuit determines that the reception data is corrupted.

10. The receiver according to claim 2, wherein the determining circuit calculates a checksum from the transmission signal,
when the calculated checksum matches with a checksum that is attached to the transmission signal, the determining circuit determines that the reception data is correct, and
when the calculated checksum does not match with the checksum that is attached to the transmission signal, the determining circuit determines that the reception data is corrupted.

11. The receiver according to claim 3, wherein the determining circuit calculates a checksum from the transmission signal,
when the calculated checksum matches with a checksum that is attached to the transmission signal, the determining circuit determines that the reception data is correct, and
when the calculated checksum does not match with the checksum that is attached to the transmission signal, the determining circuit determines that the reception data is corrupted.

12. The receiver according to claim 4, wherein the determining circuit calculates a checksum from the transmission signal,
when the calculated checksum matches with a checksum that is attached to the transmission signal, the determining circuit determines that the reception data is correct, and
when the calculated checksum does not match with the checksum that is attached to the transmission signal, the determining circuit determines that the reception data is corrupted.

13. The receiver according to claim 1, wherein the determining circuit calculates a parity from the transmission signal,
when the calculated parity matches with a parity that is attached to the transmission signal, the determining circuit determines that the reception data is correct, and
when the calculated parity does not match with the parity that is attached to the transmission signal, the determining circuit determines that the reception data is corrupted.

14. The receiver according to claim 2, wherein the determining circuit calculates a parity from the transmission signal,
when the calculated parity matches with a parity that is attached to the transmission signal, the determining circuit determines that the reception data is correct, and
when the calculated parity does not match with the parity that is attached to the transmission signal, the determining circuit determines that the reception data is corrupted.

15. The receiver according to claim 3, wherein the determining circuit calculates a parity from the transmission signal,
when the calculated parity matches with a parity that is attached to the transmission signal, the determining circuit determines that the reception data is correct, and
when the calculated parity does not match with the parity that is attached to the transmission signal, the determining circuit determines that the reception data is corrupted.

16. The receiver according to claim 4, wherein the determining circuit calculates a parity from the transmission signal,
when the calculated parity matches with a parity that is attached to the transmission signal, the determining circuit determines that the reception data is correct, and
when the calculated parity does not match with the parity that is attached to the transmission signal, the determining circuit determines that the reception data is corrupted.
